# EUROPÄISCHE PATENTSCHRIFT

(11) **EP 1 570 109 B1**
(45) Veröffentlichungstag und Bekanntmachung des Hinweises auf die Patenterteilung: **31.03.2010**
(21) Anmeldenummer: 03785718.2
(22) Anmeldetag: 03.12.2003
(51) Int. Cl.: C23C 22/36, C09D 5/08, C23C 22/44, B05D 7/00, C23C 22/83

(54) **VERFAHREN ZUR BESCHICHTUNG VON METALLSUBSTRATEN MIT EINEM RADIKALISCH POLYMERISIERBAREN BERZUGSMITTEL UND BESCHICHTETE SUBST RATE**
METHOD FOR COATING METAL SUBSTRATES WITH A RADICALLY POLYMERIZABLE COATING AGENT, AND COATED SUBSTRATES
PROCEDE POUR REVETIR DES SUBSTRATS METALLIQUES AVEC UN AGENT DE REVETEMENT POLYMERISABLE PAR POLYMERISATION RADICALAIRE, ET SUBSTRATS AINSI REVETUS

(30) Priorität: 13.12.2002 DE 10258291
(43) Veröffentlichungstag der Anmeldung: 07.09.2005
(73) Patentinhaber: Henkel AG & Co. KGaA, 40589 Düsseldorf (DE)
(72) Erfinder: KOCH, Matthias, 06033 Connecticut (US); UNGER, Kerstin, 46049 Oberhausen (DE)
(86) Internationale Anmeldenummer: PCT/EP2003/013616
(87) Internationale Veröffentlichungsnummer: WO 2004/055238

(56) Entgegenhaltungen:
- WO-A-02/24344
- US-A- 4 945 017
- US-A- 5 868 872
- US-B1- 6 475 299
- PATENT ABSTRACTS OF JAPAN vol. 2000, no. 09, 13. Oktober 2000 (2000-10-13) & JP 2000 154336 A (DENKI KAGAKU KOGYO KK), 6. Juni 2000 (2000-06-06)

## Beschreibung

Die Erfindung liegt auf dem Gebiet der Korrosionsschutzbehandlung von Metalloberflächen, die mit einer korrosionsschützenden Konversionsschicht, sowie anschließend mit einem radikalisch polymerisierbaren Beschichtungsmittel beschichtet werden, wobei die Konversionsschicht als Haftgrund für die nachfolgende Beschichtungsmittelschicht dient.

In der Bau-, Hausgeräte- und Automobilindustrie werden im steigenden Umfang metallische Substrate eingesetzt, an die verstärkte Anforderungen an den Korrosionsschutz gestellt werden. Neben den bekannten feuerverzinkten oder elektrolytisch verzinkten Stahlblechen werden auch beschichtete Oberflächen mit Zink-, Aluminiumlegierungen eingesetzt. Weiterhin können auch andere Metalle verwendet werden, insbesondere Aluminiumsubstrate oder Aluminiumlegierungen. Für die Abscheidung korrosionsschützender Schichten auf Metalloberflächen besteht ein umfangreicher Stand der Technik. Dabei werden im wesentlichen wässrige Lösungen auf die Oberfläche aufgetragen, die ggf. auch organische Polymere enthalten können. Die Bezeichnung Konversionsbehandlung sagt aus, dass während dieser Behandlung die Konversionslösung mit der Metalloberfläche chemisch reagiert, wobei eine Korrosionsschutzschicht entsteht, die Metallatome des Substrats sowie ggf. auch Polymere enthalten kann.

Es ist bekannt, dass die Verwendung von Chrom-Verbindungen oder Chromat Zugabe zu der Behandlungslösung zu einer wesentlich besseren Korrosionsschutzschicht sowie besserer Haltung führt. Grundsätzlich ist es jedoch bevorzugt, auf Grund der physiologisch bedenklichen Wirkung von Chrom, dieses Schwermetall in derartigen Prozessen zu vermeiden. Weiterhin versucht man auch andere Schwermetalle, z.B. Kobalt, Kupfer, Nickel möglichst zu verringern. Die chromfreie Konversionsbehandlung von Metalloberflächen mit Fluoriden von Bor, Silizium, Hafnium, Titan oder Zirkonium in Verbindung mit organischen Polymeren zur Erzeugung einer Konversionsschicht ist bekannt. Die Vorbehandlungslösungen werden entweder im Rinse- oder im No-Rinse-Verfahren aufgebracht. Beim Rinse-Verfahren wird nach dem Ausbilden der Konversionsschicht diese gespült, beim No-Rinse-Verfahren wird die Lösung aufgetragen und ohne Spülen getrocknet.

So werden beispielsweise in der DE-C- 24 33 704 Behandlungsbäder beschrieben, die Polyacrylsäure oder deren Salze sowie Ammoniumfluorozirkonat enthalten können. Dabei sollen die entstehenden Konversionsschichten eine verbesserte Lackhaftung zu Folgeschichten aufweisen. Aus der DE-A- 197 51 153 ist eine chromatfreie Beschichtung von Coil-Coating - Stahlblechen bekannt, in der Titan, Mangan und / oder Zirkoniumsalze von olefinisch ungesättigten polymerisierbaren Carbonsäuren, weiteren olefinischen Monomeren zusammen mit Initiatoren aufgetragen und diese danach durch UV-Strahlung vernetzt werden. In beiden Fällen können anschließend weitere Lackschichten aufgetragen werden.

In der WO 01/85853 wird ein Verfahren zur Beschichtung von Blechen beschrieben mit einem chromatfreien UV-härtenden Überzugsmittel, das Polyesteracrylate und Polyurethanacrylate enthält, und nach Vernetzung eine Korrosionsschutzschicht auf dem Substrat bildet.

In der WO 01/32321 wird ein Verfahren zur Beschichtung von Metallsubstraten beschrieben, wobei auf ein erstes Überzugsmittel nach der Härtung ein zweites Überzugsmittel aufgetragen wird, wobei dieses zweite Überzugsmittel durch Strahlung gehärtet werden kann. Das Metallsubstrat wird dabei vor der Beschichtung mit den Überzugsmitteln mit einer üblichen anorganischen Vorbehandlungslösung zur Erzeugung einer Konversionsschicht behandelt.

Die WO 02/24344 beschreibt ein Verfahren zu einer Mehrschichtlackierung von metallischen Oberflächen, bei der mindestens eine lackähnliche Schicht auf das Substrat aufgetragen wird, wobei das Substrat entweder vorher mit einer Korrosionsschutzschicht versehen wird, oder auch keine Korrosionsschutzschicht eingesetzt wird. Diese Korrosionsschutzschicht und die lackähnliche Schicht werden jeweils vernetzt, wobei für die lackähnliche Schicht UV-vernetzende Bindemittel zusammen mit Photoinitiatoren verwendet werden. Die lackähnliche Schicht kann ggf. auch zusätzlich Korrosionsinhibitoren und/oder leitfähige Partikel enthalten.

Ein Problem bei der Verwendung von Konversionsschutzschichten und UV-härtenden Überzugsmitteln liegt in der Haftung des Überzugsmittels zu dem metallischen Substrat. Besonders bei Chromatfreien Vorbehandlungen ist die Haftung häufig schlecht. Zudem führen schon geringe Störungen in der Haftung oder Risse im Überzug zu einem verstärkten Korrosionsangriff auf das darunter liegende metallische Substrat. Solche Risse und Enthaftungen, können beispielsweise direkt beim Aushärteprozess mit aktinischer Strahlung durch Schrumpf entstehen oder wenn die metallischen Substrate mechanisch verformt werden. Insbesondere bereitet es Schwierigkeiten bei der Haftung, wenn die entsprechenden Substrate als Tafeln oder Bänder vorliegen und in dieser Form gegen Korrosionen geschützt und beschichtet werden sollen, weil diese Bänder oder Tafeln danach geschnitten und in die entsprechende spätere Form gebracht werden müssen. Ein weiteres Problem liegt in der Beschichtung von Coil-Coating Materialien selbst, da bei dieser Applikation verfahrensbedingt nur sehr kurze Reaktionszeiten zur Verfügung stehen. Es ist ferner wünschenswert, die Anzahl der nacheinander folgenden Verfahrensschritte möglichst gering zu halten. Die Vorbehandlungslösungen sind im Regelfall saure Lösungen, so dass die Haftungsprobleme nicht ohne weiteres durch Zugabe von bekannten Haftungsmitteln, z.B. Silanverbindungen zu lösen sind.

Aufgabe der vorliegenden Erfindung ist es deswegen, ein Verfahren zur Verfügung zu stellen, um bei der Beschichtung von metallischen Substraten, insbesondere von tafel- oder bandförmigen metallischen Substraten, einen schnell härtenden Überzug aufzubringen, der die guten Korrosionsschutzeigenschaften von bekannten Konversionsschichten aufweist und chromatfrei arbeitet, sowie eine verbesserte Haftung und eine hohe Verformbarkeit, insbesondere bei der mechanischen Bearbeitung der Metallsubstrate, zeigt.

Die Aufgabe wird gelöst durch ein Verfahren zum Beschichten einer Metalloberfläche mit einem Überzugsmittel, wobei,
a) die Oberfläche gegebenenfalls gereinigt und entfettet wird,
b) ein wässriges chromatfreies Beschichtungsmittel zur Erzeugung einer korrosionsschützende Konversionsschicht aufgetragen und eine chromatfreie Konversionsschicht erzeugt wird,
c) auf die nicht vernetzte Konversionsschicht ein Überzugsmittel auf Basis von durch radikalische Polymerisation vernetzbaren Bindemitteln aufgetragen wird und
d) dieser Überzug durch radikalische Polymerisation vernetzt wird,
**dadurch gekennzeichnet, dass** die Konversionsschicht niedermolekulare Verbindungen mit einem Molekulargewicht kleiner als 1000 enthält, mit einer Menge von 0,1 bis 500 mg/m² Oberfläche, die durch radikalische Polymerisation vernetzbare Gruppen und H-aktive Gruppen enthalten.

Ein weiterer Gegenstand der Erfindung ist ein wässriges Beschichtungsmittel zum Erzeugen einer Konversionsschicht auf metallischen Substraten, das chromatfrei ist und 0,01 bis 40 Gew. %, vorzugsweise 0,1 bis 25 Gew. % mindestens einer niedermolekularen Verbindung mit einem Molekulargewicht kleiner als 1000 enthält, die mindestens eine H-aktive Gruppe aufweist und mindestens eine weitere funktionelle Gruppe aufweist, die durch radikalische Polymerisation vernetzt werden kann, wobei diese ausgewählt ist aus Estern oder Amiden von niedermolekularen Carbonsäuren, Polyester- oder Polyetheroligomeren mit seiten- oder endständigen (Meth)acrylgruppen oder andere Monomere, die aktivierte Doppelbindungen enthalten.

Ein weiterer Gegenstand der Erfindung ist eine Zwei-Schicht Lackierung, die durch aktininsche Strahlung vernetzt werden kann, **dadurch gekennzeichnet, dass** eine Metalloberfläche mit einer chromatfreien Konversionsschicht beschichtet wird, die niedermolekulare Verbindungen mit einem Molekulargewicht kleiner als 1000 enthält, die durch radikalische Polymerisation vernetzbare Doppelbindungen und H-aktive Gruppen aufweisen, und eine zweite Überzugsschicht aufgetragen wird, und beide Schichten gemeinsam durch radikalische Polymerisation vernetzt werden, wobei die chromatfrei Konversionsschicht frei von Polymerisationsinitiatoren ist.

Die Aufgabe wird durch ein Verfahren zum Beschichten von metallischen Substraten gelöst, bei dem auf eine gereinigte Metalloberfläche ein wässriges chromatfreies Konversionsmittel aufgetragen wird, eine Konversionsschicht erzeugt wird, die 0,1 bis 500 mg/m² von durch radikalische Polymerisation vernetzbare niedermolekulare Verbindungen aufweist, die zusätzlich eine H-funktionelle Gruppe aufweisen. Auf diese Konversionsschicht wird ein durch radikalische Polymerisation härtbares Überzugsmittel aufgetragen und danach die Konversionsschicht und das Überzugsmittel radikalisch vernetzt.

Ein weiterer Gegenstand der Erfindung ist ein Beschichtungsmittel zur Erzeugung von chromatfreien Konversionsschichten auf metallischen Substraten, dass in wässriger saurer Form vorliegt und zusätzlich 0,01 bis 40 Gew. % von niedermolekularen Verbindungen enthält, die durch radikalische Polymerisation vernetzt werden können und weitere H-funktionelle Gruppe aufweisen.

Ein weiterer Gegenstand der Erfindung ist eine Zwei-Schicht-Beschichtung auf metallischen Substraten, die aus einer erfindungsgemäßen Konversionsschicht und einer weiteren Überzugsschicht besteht. Ein weiterer Gegenstand der Erfindung ist ein Verfahren zum Beschichten von tafel- oder bandförmigen Substraten mit einer erfindungsgemäßen Konversionsschicht und einem Überzugsmittel, das durch aktinische Strahlung vernetzt werden kann.

Als Substrate für das erfindungsgemäße Verfahren sind metallische Substrate geeignet. Dabei kann es sich um homogene Substrate einer Zusammensetzung handeln, es ist jedoch auch möglich, dass verschiedene Substrattypen nebeneinander vorliegen. Die metallischen Oberflächen bestehen im allgemeinen aus Aluminium, Eisen, Kupfer, Magnesium, Nickel, Titan, Zink oder aus Legierungen von diesen Metallen. Weiterhin ist es möglich, dass übliche Eisensubstrate eingesetzt werden, die beispielsweise mit Zink, Aluminium, Magnesium oder Legierungen davon beschichtet wurden.

Die Substrate können eben sein, oder eine Raumform aufweisen. Insbesondere ist das erfindungsgemäße Verfahren jedoch geeignet, um tafelförmige oder bandförmige metallische Substrate mit einer Oberflächenbeschichtung zu versehen, z.B. in einem Coil-Coating. Verfahren. Die Substrate können später dann in andere Formen gebracht werden.

Bei dem erfindungsgemäßen Verfahren wird als erster Schritt auf der vorbereiteten Oberfläche, d.h. eine im allgemeinen staub- und fettfreie gereinigte Oberfläche, eine chromatfreie Konversionsschicht erzeugt. Diese Konventionsschicht soll 0,1 bis 500 mg/m² beschichteter Oberflächen durch radikalische Polymerisation vernetzbare, niedermolekularen Verbindungen aufweisen, die zusätzlich H-funktionelle Gruppen enthalten, bevorzugt bis 250 mg/m², insbesondere zwischen 0,5 bis 100 mg/m². Insbesondere sollen keine Polymerisationsinitiatoren in der Konversionsschicht enthalten sein.

Eine bevorzugte Möglichkeit zur Erzeugung der Konventionsschicht ist die Verwendung einer wässrigen chromatfreien Konversionslösung, die 0,01 bis 40 Gew. % von durch radikalische Polymerisation vernetzbare niedermolekulare Verbindungen mit H-funktionelle Gruppen enthält. Unter wässriger Konversionslösung sollen die bekannten wässrigen Systeme verstanden werden, die echte Lösungen, Dispersionen und / oder Emulsionen einschließen sollen. Diese wird vorzugsweise bei einer Temperatur von ca. 10 bis 75 °C aufgetragen. Insbesondere soll der Temperaturbereich von 15 bis 50 °C betragen. Auf die Metalloberfläche kann die wässrige Konversionslösung durch Spritzen, Quetschen, Tauchen, unter Verwendung einer Walze, mit einem Rollcoater oder einer Spritzdüse aufgetragen werden. Insbesondere ist für ebene Substrate das Beschichten mit einem Rollcoater bevorzugt. Verfahren zum Auftragen solcher Beschichtungsmittel sind in der Literatur beschrieben und können je nach Anwendungszweck angepasst werden. Die wässrige Lösung lässt man im allgemeinen für eine Zeitdauer von 0,1 sec. bis 5 min. auf der Metalloberfläche einwirken, insbesondere zwischen 0,5 sec. bis 30 sec. Dabei ist es bevorzugt, dass im No-Rinse-Verfahren gearbeitet wird, d.h. eine Nachspülung der Konversionsoberfläche ist nicht erforderlich.

Die entstehende Konversionsschicht wird zunächst nicht weiter vernetzt. Sie ist nur sehr dünn, und die Schichtdicke im Nassfilm soll unter 5 µm, insbesondere unter 1 µm liegen. Der Nassfilm wird anschließend ggf. auch bei erhöhter Temperatur getrocknet. Die erfindungsgemäß erzeugte Konversionsschicht soll Anteile von radikalisch polymerisierbaren Verbindungen enthalten. Das mit dieser erfindungsgemäßen Konversionsschicht beschichtete Material kann direkt weiterverarbeitet oder aber auch zwischengelagert werden.

Weiterhin ist es möglich, um die radikalisch polymerisierbare Verbindungen enthaltende Konversionsschicht zu erzeugen, auf der Substratoberfläche eine übliche chromatfreie Konversionsschicht zu erzeugen. Diese wird danach getrocknet oder nass-in-nass mit einer wässrigen Lösung beschichtet, die 0,1 bis 40 Gew.%, bevorzugt 0,5 bis 25 Gew.%, mindestens einer reaktive polymerisierbare Doppelbindung und mindestens eine reaktive H-Gruppe aufweisenden niedermolekularen Verbindung enthält, sowie ionische oder nicht ionische handelsübliche Emulgatoren, ggf. Anteile von hydrophilen Lösemitteln und weitere Hilfsstoffe. Dabei sollen echte Lösungen, Emulsionen oder Suspensionen eingeschlossen sein. Das Auftragen der Beschichtungsmittel kann nach den erwähnten Verfahren erfolgen, es ist aber auch möglich, die wässrige Lösung nur in Form eines Spülbades mit der Konversionsschicht in Kontakt zu bringen.

Eine weitere Verfahrensweise besteht in einer Umkehr der Reihenfolge der Schritte. Dabei wird auf das ggf. gereinigte Substrat die oben erwähnte wässrige Lösung aufgetragen, ggf. angetrocknet, und dann ein im Prinzip bekanntes Konversionsmittel aufgetragen. Auch die so erhaltene Konversionsschicht enthält eine ausreichende Menge der niedermolekularen polymerisierbaren Verbindungen.

Als zweite Schicht des erfindungsgemäßen Verfahrens werden Überzugsmittel aufgetragen, die durch radikalische Polymerisation gehärtet werden können. Solche Überzugsmittel sind in der Literatur weit bekannt und für verschiedene Anwendungszwecke beschrieben. Es kann sich um Klarlackschichten handeln oder um pigmentierte Systeme. Es können flüssige oder pulverförmige Überzugsmittel aufgetragen werden. Es ist möglich, die entsprechende Schicht als Grundierung mit besonderen Eigenschaften zu versehen, z.B. Leitfähigkeit, Schweißbarkeit, Korrosionsschutz, oder es können dekorative Decklackschichten erzeugt werden. Solche Systeme bestehen beispielsweise aus mindestens einem radikalisch polymerisierbare ungesättigte Gruppen aufweisenden Polymer, Prepolymer oder Oligomeren, Reaktivverdünner oder monomeren Komponenten, sowie aus lacküblichen Hilfsstoffen. Dabei kann es sich um Verlaufsmittel, Lösemittel, Haftvermittler, Thixotropierungs- und Anti-Absetzmittel, Pigmente oder Farbstoffe handeln, sowie insbesondere Polymerisationsinitiatoren. Insbesondere haben sich Prepolymere auf Basis von (Meth)acrylatharzen ggf. mit weiteren Comonomeren als geeignet gezeigt. Die Initiatoren können thermisch aktiviert werden oder es handelt sich um Photoinitiatoren. Beispiele für geeignete durch Polymerisation härtender Lacksysteme sind in der DE-A 199 56 659, DE-A-199 25 631, US 59 87 727, WO 2001091926 oder EP 0783534 beschrieben.

Die im erfindungsgemäßen Verfahren aufzutragenden Überzugsmittel können im Hinblick auf die spätere Verwendung ausgewählt werden. Wenn die Substrate verformt werden, sind bevorzugt nicht zu stark vernetzende, flexible Überzugsschichten günstig. Die Schichten können farblos sein, um das Substrat sichtbar zu halten, sie können jedoch auch durch Farbstoffe oder Pigmente gefärbt werden. Außerdem können für bestimmte Anwendungszwecke besondere Zusatzstoffe verwendet werden, z.B. leitfähige und/oder korrosionsschützende Pigmente. Die Überzugsmittel enthalten Initiatoren, dabei handelt es sich um handelsübliche, dem Fachmann hinlänglich bekannten Produkte. Diese Überzugsmittel werden durch radikalische Polymerisation vernetzt. Dabei kann eine thermische Polymerisation bei Verwendung geeigneter Initiatoren durchgeführt werden. Bei dem erfindungsgemäßen Verfahren werden jedoch Überzugsmittel bevorzugt, die Photoinitiatoren enthalten und durch aktinische Strahlung vernetzt werden können.

Die vorbehandelte Substratoberfläche wird mit einem Überzugsmittel als zweite Schicht durch bekannte Verfahren beschichtet. Es ist darauf zu achten, dass die im ersten Verfahrenschritt gebildete Konversionsschicht noch nicht vernetzt ist. Sie soll trocken sein, ggf. kann sie auch nur angetrocknet und so im nass-in-nass Verfahren mit dem Überzugsmittel beschichtet werden.

Die Applikation des Überzugsmittels gemäß der Erfindung geschieht im allgemeinen bei Temperaturen zwischen 10 und 90°C, bevorzugt 15 und 75°C. Die Überzugsschicht kann thermisch vernetzt werden, bevorzugt wird der Überzug durch aktinische Strahlung, wie zum Beispiel UV-Strahlung, Elektronenstrahlung oder γ-Strahlung vernetzt. Die Elektronenstrahlung soll Energiewerte zwischen 50 und 500 keV aufweisen. Bevorzugt ist eine Vernetzung durch UV-Strahlung, insbesondere mit einer Wellenlänge von 150 bis zu 800 nm, besonders bevorzugt zwischen 200 und 450 nm. Entsprechende Strahlungsquellen sind dem Fachmann bekannt. Die Strahlungsintensität und die Dauer der Bestrahlung hängen von den Verfahrensbedingungen ab, z.B. Abstand der Strahlungsquelle oder relative Bewegung zwischen Quelle und Substrat. Die Dauer liegt jedoch im allgemeinen unter 60 sec, bevorzugt zwischen 0,001 und 30 sec. Die jeweiligen Anlagenparameter können vom Fachmann durch Anpassung bestimmt werden.

Die Schichtdicke der zu härtenden Beschichtung aus Konversionsschicht und Überzugsmittel beträgt 0,1 bis 100 µm, bevorzugt bis zu 20 µm, besonders bevorzugt zwischen 0,5 bis 10 µm.

Im bevorzugten Fall der Coil-Coating Beschichtung werden diese z.B. durch Spritzen, Quetschen, Tauchen, unter Verwendung einer Walze, mit einem Rollcoater oder einer Spritzdüse aufgetragen. Insbesondere ist das Beschichten mit einem Rollcoater bevorzugt. Die Verfahren sind bekannt und können je nach vorgegebener Anlage angepasst werden. In dieser Ausführungsform können die einzelnen Verfahrensschritte unmittelbar aufeinander folgen. Es wird eine Vernetzung der beiden Schichten durch aktinische Strahlung insbesondere UV-Strahlung erzeugt. Nachdem die Beschichtung vernetzt wurde, kann das Substrat entweder direkt weiterverarbeitet werden, oder es wird gelagert, z.B. als gewickelter Coil.

Die Konversionsschicht kann auch durch ein erfindungsgemäßes Beschichtungsmittel erzeugt werden. Wässrige Lösungen zum Erzeugen einer Konversionsschicht sind allgemein bekannt und in der Literatur beschrieben. Beispielsweise werden in der EP-A 694 593, EP-A 792 922, der US-A 5 344 504, US 5 427 632 der WO 95/14117 oder der WO 95/04169 solche Lösungen und Anwendungsverfahren beschrieben. Dabei handelt es sich um wässrige Lösungen, die im allgemeinen einen pH unterhalb von 6 aufweisen. Sie enthalten beispielsweise Komplexfluoride von Hf, B, Ti, Zr, Si, z.B. als Hexafluorozirkonsäure, Fluorwasserstoffsäure, Hexafluorotitansäure, Hexafluorosilikate. Die entsprechenden Fluoride der genannten Elemente können in Form von Fluorosäuren oder Alikalimetall und / oder Ammoniumsalzen in der wässrigen Lösung enthalten sein. Weiterhin können auch Phosphat-, Manganat-, Vanadat-, Wolframat- oder Molybdat- und ähnliche Ionen in der Konversionslösung enthalten sein.

Die wässrigen Lösungen sind im allgemeinen bei saurem pH stabil, insbesondere liegt der pH unter 5. Die wässrigen Lösungen können weitere Hilfsmittel enthalten z.B. reaktive Silane, Entschäumer oder Netzmittel. Weiterhin können geringe Anteile von organischen Polymeren enthalten sein, z.B. Poly(meth)acrylate, Polyurethane, Epoxidharze, Aminoplastharze, Phenolformaldehydharze, Polycarbonsäuren, Polymere Alkohole und / oder deren Veresterungsprodukte. Polyvinylphenole, aminogruppenhaltige Homo- oder Copolymere, oder Copolymere von Vinylpyrrolidon. Solche Polymere sind bekannt und beispielsweise in der DE-A-100 10 758 beschrieben.

Als Hauptbestandteil des erfindungsgemäßen Beschichtungsmittels können die üblichen bekannten Konversionslösungen ausgewählt werden. Es soll sich jedoch um chrom- oder chromatfreie Lösungen handeln Erfindungsgemäß sind in dem Beschichtungsmittel zur Erzeugung der Konversionsschicht niedermolekulare Verbindungen enthalten, die mindestens eine zur Vernetzung durch radikalische Polymerisation fähige Gruppe enthalten. Unter niedermolekularen Verbindungen sind flüssige oder feste, monomere oder oligomere Verbindungen oder Gemische davon zu verstehen, die im Mittel eine oder mehrere bei der Polymerisation reaktive Doppelbindung enthalten sowie eine weitere H-aktive funktionelle Gruppe. Dabei sind polare und / oder ionische Anteile im Molekül enthalten und unpolare hydrophobe Anteile. Verbindungen mit solchen Doppelbindungen sind beispielsweise Ester oder Amide von niedermolekularen ungesättigten Carbonsäuren wie Acrylsäure, Methacrylsäure, Crotonsäure, Maleinsäure, Fumarsäure, usw. oder Polyester- oder Polyetheroligomere mit seitenständigen oder endständigen (Meth)acrylgruppen, oder andere Monomere, die aktivierte Doppelbindungen enthalten, wie funktionalisierte Vinylether. Bevorzugt sind Verbindungen mit Acrylatgruppen und/oder Methacrylatgruppen. Diese Verbindungen können mehrere reaktive, polymerisierbare Doppelbindungen aufweisen, bevorzugt haben sie jedoch mindestens eine reaktive Doppelbindung. Sie haben ein Molekulargewicht kleiner als 1000. Diese Verbindungen enthalten weiterhin mindestens eine H-aktive funktionelle Gruppe, d.h. Gruppen, die Protonen abspalten können. Im Fall von Estern oder Amiden ungesättigter Säuren können die COOH-Gruppen der Säure mit Alkoholen oder Aminen umgesetzt sein, die als weitere Funktionalität diese H-aktive Gruppen enthalten. Solche H-aktiven Gruppen sind beispielsweise OH-, SH-, NH₂-, NRH-, HOOC-, HSO₃-, HSO₄-, (OH)₂PO-, (HO)₂PO₂-,(OH)(OR)-PO- oder (OH)(OR)-PO₂-Gruppen. Insbesondere sind saure H-funktionelle Gruppen bevorzugt, insbesondere Carbonsäure, Sulfonsäuren, Phosphonsäuren und Phosphorsäuregruppen bevorzugt. Sie sind kommerziell erhältlich beispielsweise Fa. Cray Valley: SR 9050, SR 9051; Fa. UCB: Ebecryl 168, Ebecryl 170, Fa. Akros: Actilane 820, Fa. Rhodia: Sipomer PAM 100 bzw. 200, Fa. Cognis; Photomer 4073, Photomer 2073; Fa. Rahn: Additiv 97-070, wobei es sich häufig bei diesen Produkten um Gemische handelt.

Die Menge der niedermolekularen reaktiven Verbindungen soll zwischen 0,01 bis 40 Gew. % liegen, bevorzugt unter 25 Gew. % insbesondere 0,1 bis 15 Gew. %, besonders bevorzugt 0,5 bis 10 Gew. %. Es kann eine ausgewählte Verbindung in der Konversionslösung vorhanden sein, oder es können mehrere verschiedene Verbindungen in gleicher oder unterschiedlicher Konzentration vorhanden sein. Im allgemeinen handelt es sich um Gemische von monomeren oder oligomeren Substanzen. Die Verbindungen werden so ausgewählt, dass sie bei dem pH-Wert der wässrigen Konversionslösung stabil in der Lösung dispergiert werden können. Die Stabilität gegen Phasenseparation oder gegen Ausflocken von Bestandteilen soll mehr als 3 Stunden betragen, insbesondere über 24 Stunden. Das kann durch die Auswahl der niedermolekulare Verbindungen sowie durch den pH-Wert der Lösung beeinflusst werden. Zweckmäßig kann es jedoch sein, einen handelsüblichen Emulgator oder Emulgatormischungen zuzusetzen, wobei diese auch in saurer Lösung aktiv sein sollen.

Die ungesättigten Doppelbindungen sollen durch radikalische Polymerisation vernetzt werden können. Das kann durch einen Zusatz von thermischen oder strahlungsempfindlichen Radikalinitiatoren geschehen. Besonders bevorzugt sind allerdings in den Beschichtungsmitteln zur Ausbildung der Konversionsschicht keine Radikalinitiatoren vorhanden. Bevorzugt sollen die ungesättigten Doppelbindungen durch eine Vernetzung mit aktinischer Strahlung reagieren.

Es ist möglich, wenn stabile Lösungen erhalten werden, dass die wässrige Lösung zur Erzeugung der Konversionsschicht als 1-Komponenten-Mittel hergestellt wird. Dieses wird üblicherweise in konzentrierter Form hergestellt und dann kurz vor der Anwendung mit Wasser auf eine geeignete Viskosität und Festkörper herabgesetzt. Dabei ist dann die erfindungsgemäß eingesetzte ungesättigte Verbindung in dem Konzentrat enthalten. Es ist jedoch möglich, wenn die Stabilität der Monomeren in der wässrigen Phase nicht ausreichend gegeben ist, dass eine 2-Komponenten-Mischung hergestellt wird. Dabei soll die eine Komponente insbesondere aus den wässrigen konzentrierten Lösungen eines im wesentlichen bekannten Konversionsmittels bestehen, die zweite Komponente besteht aus den ungesättigten reaktiven Verbindungen wobei ggf. Hilfsmittel, wie beispielsweise , bevorzugt polare, organische Lösemittel, Dispergierhilfsmittel, Entschäumungsmittel, anteilig oder ausschließlich in der zweiten Komponente vorhanden sein können. Unmittelbar vor der Applikation werden die beiden Komponenten gemischt und ggf. mit Wasser auf eine geeignete Applikationsviskosität und einen geeigneten Applikationsfestkörpergehalt eingestellt, und das erfindungsgemäße Beschichtungsmittel ist dann für einen längeren Zeitraum anwendungsfertig. Das Mischen wird mit bekannten Mischaggregaten durchgeführt.

Das erfindungsgemäße Verfahren gibt eine sehr gut haftende Beschichtung auf dem Metallsubstrat, die hervorragende Korrosionsschutzeigenschaften zeigt Bei passender Auswahl eines Bindemittels ist eine hohe Flexibilität bei der Weiterverarbeitung gegeben und es bilden sich keine Enthaftungen von dem Substrat. Dabei wird auch an diesen verformten Stellen ein guter Korrosionsschutz beobachtet. Durch die Verwendung von durch aktinische Strahlung vernetzenden Systemen mit einem Vernetzungsschritt wird ein guter Verbund zum Substrat sichergestellt, sowie kurze Aushärtungszeiten können erzielt werden und eine entsprechend schnelle Verarbeitung kann erfolgen. Es zeigt sich, dass auch der Energieverbrauch geringer ist als bei thermisch härtenden Systemen.

Werden die Beschichtungen in Coil-Coating-Verfahren verarbeitet, ist es zweckmäßig, die Beschichtungsmittel im Rollcoater aufzutragen. Ggf. können einzelne Lösungen auch im Rahmen eines Spülbads auf das Substrat gebracht werden. Dabei kann die mehrfache Beschichtung mit geringer Baulänge der Coating-Anlage erzielt werden.

Die erfindungsgemäße Konversionslösung zeigt gute Anwendungseigenschaften und kann den Applikationsbedingungen angepasst werden. Es wird eine geringe Schaumbildung beobachtet. Die Haftung zwischen Substrat und Überzugsschicht wird verbessert und auch nach einer möglichen Verformung sichergestellt.

Die erfindungsgemäß beschichteten Substrate sind für eine Vielfalt von verschiedenen Anwendungszwecken geeignet, beispielsweise in der Fahrzeugindustrie, in der Haushaltswarenindustrie oder auch in der Bauindustrie. Die nachfolgenden Beispiele sollen die Erfindung erläutern.

### Beispiel 1:

Ein Vorbehandlungskonzentrat wird durch Mischen der angegebenen Komponenten (s. nachfolgende Tabelle, Angaben in Gew. %) hergestellt.
Nach intensiven Homogenisieren ist die Lösung gebrauchsfertig und kann zur Applikation bei Bedarf mit vollentsalztem Wasser verdünnt werden.

| | **Beispiel 1a** | **Beispiel 1b** |
|---|---|---|
| Voll entsalztes Wasser | 64,6 | 46,8 |
| ZnO | | 4,8 |
| H₃PO₄ (75 %) | 4,6 | 26,7 |
| H₂ TiF₆ (50 %) | | 15,0 |
| H₂ TiF₆ (60 %) | 8,0 | |
| Aminomethyl-substituiertes Polyvinylphenol | 20,4 | |
| Stärke | | 0,3 |
| Mangan(II)oxid | 2,4 | 5,2 |
| Molybdän-Komplex * | | 1,2 |
| | | |

| | | |
|---|---|---|
| *nach US 5,683,816 | | |

### Beispiel 2:

Ein UV-vernetzbares Überzugsmittel wird durch Mischen der Komponenten bei Raumtemperatur hergestellt (vgl. Tabelle, Angaben in Gew. %). Das Überzugsmittel ist danach applikationsfertig.

| | **Beispiel 2a** | **Beispiel 2b** |
|---|---|---|
| Urethanacrylat | 34,9 | 35,5 |
| Dipropylenglycoldiacrylat | 19,5 | 8 |
| Trimethylolpropan-formalacrylat | 34,3 | 34,9 |
| Phosphorsäureester | 4,4 | 4,7 |
| Bis-(2,4,6-trimethylbenzoyl)-phenyl-phosphinoxid | 3,9 | 4,0 |
| 1-Hydrbxycyclohexylphenyl-keton | 1,0 | 1,0 |
| Leitfähigkeitspigment | 2,0 | 0 |

### Beispiel 3:

Zu 100 g der Lösung aus Beispiel 1 a oder 1 b werden 12 g einer Mischung aus Mono-, Di- und Triestern der Phosphorsäure von 2-Hydroxyethylacrylat gegeben und 5 min. intensiv gerührt. Diese Mischung wird 1:1 mit destilliertem Wasser versetzt. Das Vorbehandlungslösung (Beispiel 3a, 3b) ist danach anwendungsfertig. Die Vorbehandlungslösung zeigt beim Verarbeiten eine geringere Schaumbildung als die Lösung des Beispiels 1.

Auf ein mit alkalischen. Reinigern entfettetes, trockenes HDG-Blechsubstrat wird die Lösung der Beispiele 3a oder 3b aufgetragen und mit einem Rollcoater appliziert. Es erfolgt eine Trocknung für 5 min. bei 70°C. Danach wird mittels eines Rollcoaters ein Überzugsmittel entsprechend Beispiel 2 in einer Schichtdicke von ca. 5 µm aufgetragen. Die Beschichtungen werden danach unmittelbar durch Bestrahlung mit UV-Lampen (Typ Fusion VPS/1600, H- + D-Strahler, je 240 W/cm, 100 % Leistung) bei einer Bandgeschwindigkeit von 20 m/min gehärtet.

| **Vorbehandlung** | **Überzugsmittel** | **T-Bend** | **Reverse Impact** |
|---|---|---|---|
| 3a | 2a | 3 | 1 |
| 3a | 2b | 3-4 | 1-2 |
| 3b | 2a | 3 | 1-2 |
| 3b | 2b | 3-4 | 1-2 |

Analoge Versuche werden auch mit kaltgewalzten Blechen und mit Aluminium als Substrat durchgeführt. Die Versuchsergebnisse zeigen ebenfalls ein verbessertes Haftungsverhalten der erfindungsgemäßen Vorbehandlungslösungen aus Beispiel 3.

### Beispiel 4:

Ein entfettetes, trockenes HDG-Substrat wird mit einer Lösung aus 12 g einer homogenen Mischung aus Mono-, Di- und Triestern der Phosphorsäure mit 2-Hydroxyethylacrylat, 87 g Wasser und 1 g eines handelsüblichen Emulgators gespült. Nach kurzem Abdunsten des Wassers wird auf die Oberfläche eine Konversionsschicht aus einer Lösung nach Beispiel 1a erzeugt. Diese Konversionsschicht wird kurz getrocknet und dann mit einem Überzugsmittel nach Beispiel 2a beschichtet. Der Überzug wird wie in Beispiel 3 gehärtet. Der Überzug haftet gut auf dem Substrat und der Korrosionsschutz ist gut.

### Beispiel 5 - Vergleichsversuche:

Es wird nach dem Verfahren des Beispiels 3 gearbeitet, jedoch die Vorbehandlungslösung nach Beispiel 1 verwendet.

| **Vorbehandlung** | **Überzugsmittel** | **T-Bend** | **Reverse Impact** |
|---|---|---|---|
| 1a | 2a | 5 | 5 |
| 1a | 2b | 5 | 5 |

Die Vergleichsversuche mit der Vorbehandlungslösung ohne UV-härtende Komponente zeigen deutlich schlechteres Haftungsverhalten.

### Beispiel 6 - Vergleichsversuche:

Die erfindungsgemäße Vorbehandlungslösung 3a wird mit 0.12 % einer wässrigen Dispersion von Bis-(2,4,6-trimethylbenzoyl)-phenyl-phosphinoxid versetzt und wie in Beispiel 3 beschrieben auf ein gereinigtes HDG-Blech appliziert, getrocknet und anschließend unter den ebenfalls in Beispiel 3 angegebenen Bedingungen mit UV-Strahlung gehärtet. Auf diese Oberfläche wurde dann ein Überzugsmittel nach Beispiel 2a aufgetragen und noch einmal mit UV-Strahlung (analoge Bedingungen wie zuvor) gehärtet.

| **Vorbehandlung** | **Überzugsmittel** | **T-Bend** | **Reverse Impact** |
|---|---|---|---|
| 3a | 2a | 3-4 | 5 |

| | | | |
|---|---|---|---|
| Die Beschichtung zeigte ein schlechteres Haftungsverhalten. T-Bend test: gem. ECCA-Prüfverfahren T7 [1996]: "Resistance to Cracking on Bending" Reverse Impact test: gem. ECCA-Prüfverfahren T5 [1985]: "Widerstand gegen Rissbildung bei schneller Umformung" | | | |

## Patentansprüche

1. Verfahren zum Beschichten einer Metalloberfläche mit einem Überzugsmittel, wobei,
a) die Oberfläche gegebenenfalls gereinigt und entfettet wird,
b) ein wässriges chromatfreies Beschichtungsmittel zur Erzeugung einer korrosionsschützende Konversionsschicht aufgetragen und eine chromatfreie Konversionsschicht erzeugt wird,
c) auf die nicht vernetzte Konversionsschicht ein Überzugsmittel auf Basis von durch radikalische Polymerisation vernetzbaren Bindemitteln aufgetragen wird und
d) dieser Überzug durch radikalische Polymerisation vernetzt wird,
**dadurch gekennzeichnet, dass** die Konversionsschicht niedermolekulare Verbindungen mit einem Molekulargewicht kleiner als 1000 enthält, mit einer Menge von 0,1 bis 500 mg/m² Oberfläche, die durch radikalische Polymerisation vernetzbare Gruppen und H-aktive Gruppen enthalten.

2. Verfahren nach Anspruch 1, **dadurch gekennzeichnet, dass** der Überzug durch aktinische Strahlung vernetzt wird.

3. Verfahren nach Anspruch 2, **dadurch gekennzeichnet, dass** der Überzug durch UV- Strahlung vernetzt wird.

4. Verfahren nach Anspruch 2, **dadurch gekennzeichnet, dass** der Überzug durch Elektronenstrahlung vernetzt wird.

5. Verfahren nach Anspruch 1 bis 4, **dadurch gekennzeichnet, dass** das wässrige chromatfreie Beschichtungsmittel 0,01 bis 40 Gew. % von niedermolekularen Verbindungen enthält, die durch radikalische Polymerisation vernetzbare Gruppen und H-aktive Gruppen enthält.

6. Verfahren nach Anspruch 5, **dadurch gekennzeichnet, dass** das Beschichtungsmittel niedermolekulare Verbindungen enthält, die im Mittel mindestens eine reaktive Doppelbindung und mindestens eine H-aktive Gruppe aufweisen.

7. Verfahren nach Anspruch 1 bis 4 , **dadurch gekennzeichnet, dass** auf eine Konversionsschicht eine wässrige initiatorfreie Lösung aufgetragen wird, die mindestens einen Emulgator sowie 0,1 bis 40 Gew. % niedermolekularer Verbindungen enthält, die durch radikalische Polymerisation vernetzt werden können und mindestens eine H-aktive Gruppe aufweisen.

8. Verfahren nach Anspruch 1 bis 4 , **dadurch gekennzeichnet, dass** auf das Substrat eine wässrige initiatorfreie Lösung aufgetragen wird, die mindestens einen Emulgator sowie 0,1 bis 40 Gew. % niedermolekularer Verbindungen enthält, die durch radikalische Polymerisation vernetzt werden können und eine H-aktive-Gruppe aufweisen, und nach Antrocknen ein Beschichtungsmittel zur Erzeugung der Konversionsschicht aufgetragen wird.

9. Verfahren nach Anspruch 1 bis 8, **dadurch gekennzeichnet, dass** als metallische Oberfläche ein Material auf Basis von Eisenwerkstoffen, Stahl und legiertem Stahl, Aluminium, Magnesium, Zink oder Legierungen davon oder entsprechend oberflächenbeschichtete Materialien ausgewählt werden.

10. Verfahren nach Anspruch 9, **dadurch gekennzeichnet, dass** band- oder tafelförmige Substrate beschichtet werden.

11. Wässriges Beschichtungsmittel zum Erzeugen einer Konversionsschicht auf metallischen Substraten, das chromatfrei ist und 0,01 bis 40 Gew. %, vorzugsweise 0,1 bis 25 Gew. % mindestens einer niedermolekularen Verbindung mit einem Molekulargewicht kleiner als 1000 enthält, die mindestens eine H-aktive Gruppe aufweist und mindestens eine funktionelle Gruppe aufweist, die durch radikalische Polymerisation vernetzt werden kann, wobei diese ausgewählt ist aus Estern oder Amiden von niedermolekularen Carbonsäuren, Polyester- oder Polyetheroligomeren mit seiten- oder endständigen (Meth)acrylgruppen oder andere Monomere, die aktivierte Doppelbindungen enthalten.

12. Wässriges Beschichtungsmittel nach Anspruch 11, **dadurch gekennzeichnet, dass** die radikalisch vernetzbare funktionelle Gruppe eine ungesättigte Carbon-säure- oder Carbonamidgruppe ist, insbesondere eine Acryl- oder eine Methacrylgruppe.

13. Wässriges Beschichtungsmittel nach Anspruch 11 und 12, **dadurch gekennzeichnet, dass** die H-aktive Gruppe eine saure Gruppe ist, insbesondere eine Carbonsäure, Sulfonsäure, sowie Phosphorsäure und Phosphonsäure oder deren Derivate.

14. Wässriges Beschichtungsmittel nach Anspruch 13, enthaltend als niedermolekulare Verbindung 0,1 bis 15 Gew. % phosphorsaure oder phosphonsaure (Meth)acrylatverbindungen.

15. Wässriges Beschichtungsmittel nach Anspruch 11 bis 14, **dadurch gekennzeichnet, dass** keine Polymerisationinitiatoren enthalten sind.

16. Verwendung eines Beschichtungsmittels nach Anspruch 11 in einem Verfahren nach Anspruch 1 bis 4.

17. Zwei-Schicht Lackierung, die durch aktinische Strahlung vernetzt werden kann, **dadurch gekennzeichnet, dass** eine Metalloberfläche mit einer chromatfreien Konversionsschicht beschichtet wird, die niedermolekulare Verbindungen mit einem Molekulargewicht kleiner als 1000 enthält, die durch radikalische Polymerisation vernetzbare Doppelbindungen und H-aktive Gruppen aufweisen, und eine zweite Überzugsschicht aufgetragen wird, und beide Schichten gemeinsam durch radikalische Polymerisation vernetzt werden, wobei die chromatfreie Konversionsschicht frei von Polymerisationsinitiatoren ist.

18. Zwei-Schicht Lackierung nach Anspruch 17 , **dadurch gekennzeichnet, dass** die zweite Überzugsschicht mit einem pulverförmigen oder einem flüssigen Überzugsmittel hergestellt wurde.

19. Zwei-Schicht Lackierung nach Anspruch 18, **dadurch gekennzeichnet, dass** das Substrat anschließend verformt wird und vor oder nach der Verformung weitere Lackschichten aufgetragen werden.

## Claims

1. A method for coating a metal surface with a covering agent, wherein
a) the surface is if necessary cleaned and degreased,
b) an aqueous chromate-free coating agent is applied in order to produce a corrosion-protective conversion layer and a chromate-free conversion layer is produced,
c) a covering material based on binders which are crosslinkable by radical polymerization is applied on the non-crosslinked conversion layer and
d) this covering is crosslinked by radical polymerization,
**characterized in that** the conversion layer contains low molecular weight compounds with a molecular weight of less than 1,000, with an amount of 0.1 to 500 mg/m² of surface, which contains groups which are crosslinkable by radical polymerization and groups with active H.

2. The method according to claim 1, **characterized in that** the covering is crosslinked by actinic radiation.

3. The method according to claim 2, **characterized in that** the covering is crosslinked by UV radiation.

4. The method according to claim 2, **characterized in that** the covering is crosslinked by electron radiation.

5. The method according to claim 1 to 4, **characterized in that** the aqueous chromate-free coating agent contains 0.01 to 40% by weight of low molecular weight compounds, which contain groups which are crosslinkable by radical polymerization and groups with active H.

6. The method according to claim 5, **characterized in that** the coating agent contains low molecular weight compounds, which on average have at least one reactive double bond and at least one group with active H.

7. The method according to claim 1 to 4, **characterized in that** an aqueous initiator-free solution which contains at least one emulsifier as well as 0.1 to 40% by weight of low molecular weight compounds, which are crosslinkable by radical polymerization and have at least one group with active H, is applied on a conversion layer.

8. The method according to claim 1 to 4, **characterized in that** an aqueous initiator-free solution, which contains at least one emulsifier as well as 0.1 to 40% by weight of low molecular weight compounds, which are crosslinkable by radical polymerization and have a group with active H, is applied on the substrate and after drying a coating agent is applied for producing the conversion layer.

9. The method according to claim 1 to 8, **characterized in that** as a metal surface, a material is selected based on ferrous products, steel and alloyed steel, aluminium, magnesium, zinc or alloys thereof or correspondingly surface-coated materials.

10. The method according to claim 9, **characterized in that** strip-shaped or table-shaped substrates are coated.

11. An aqueous coating agent for producing a conversion layer on metal substrates, which is free of chromate and contains 0.01 to 40% by weight, preferably 0.1 to 25% by weight of at least one low molecular weight compound with a molecular weight of less than 1,000, which has at least one group with active H and has at least one functional group, which is crosslinkable by radical polymerization, wherein the latter is selected from esters or amides of low molecular weight carboxylic acids, polyester or polyether oligomers with lateral or terminal (meth)acryl groups or other monomers which contain activated double bonds.

12. The aqueous coating agent according to claim 11, **characterized in that** the functional group which is crosslinkable by radical polymerization is an unsaturated carboxylic acid or carboxylic amide group, in particular an acryl or methacryl group.

13. The aqueous coating agent according to claim 11 and 12, **characterized in that** the group with active H is an acid group, in particular carboxylic acid, sulfonic acid, as well as phosphoric acid and phosphonic acid, or derivatives thereof.

14. The aqueous coating agent according to claim 13, containing as a low molecular weight compound, 0.1 to 15% by weight of phosphoric or phosphonic (meth)acrylate compounds.

15. The aqueous coating agent according to claim 11 to 14, **characterized in that** it contains no polymerization initiators.

16. The use of a coating agent according to claim 11 in a method according to claim 1 to 4.

17. A two-layer coating, which may be cross-linked by actinic radiation, **characterized in that** a metal surface is coated with a chromate-free conversion layer, which contains low molecular weight compounds with a molecular weight of less than 1,000, which have double bonds which are crosslinkable by·radical polymerization and groups with active H, and a second covering layer is applied, and both layers are crosslinked together by radical polymerization, wherein the chromate-free conversion layer is free of polymerization initiators.

18. A two-layer coating according to claim 17, **characterized in that** the second covering layer was made with a powdery or a liquid covering agent.

19. The two-layer coating according to claim 18, **characterized in that** the substrate is then shaped and further coating layers are applied before or after the shaping.

## Revendications

1. Procédé pour revêtir une surface métallique avec un agent de recouvrement, dans lequel
a) la surface est le cas échéant nettoyée et dégraissée,
b) un agent de revêtement aqueux, exempt de chromate est appliqué en vue de produire une couche de conversion protégeant contre la corrosion et une couche de conversion exempte de chromate est produite,
c) un agent de recouvrement à base de liants réticulables par polymérisation radicalaire est appliqué sur la couche de conversion non réticulée et
d) ce recouvrement est réticulé par polymérisation radicalaire,
**caractérisé en ce que** la couche de conversion contient des composés de bas poids moléculaire, présentant un poids moléculaire inférieur à 1000, en une quantité de 0,1 à 500 mg/m² de surface, qui contiennent des groupes réticulables par polymérisation radicalaire et des groupes à H actif.

2. Procédé selon la revendication 1, **caractérisé en ce que** le recouvrement est réticulé par rayonnement actinique.

3. Procédé selon la revendication 2, **caractérisé en ce que** le recouvrement est réticulé par rayonnement UV.

4. Procédé selon la revendication 2, **caractérisé en ce que** le recouvrement est réticulé par rayonnement électronique.

5. Procédé selon la revendication 1 à 4, **caractérisé en ce que** l'agent de revêtement aqueux, exempt de chromate contient 0,01 à 40% en poids de composés de bas poids moléculaire, qui contiennent des groupes réticulables par polymérisation radicalaire et des groupes à H actif.

6. Procédé selon la revendication 5, **caractérisé en ce que** l'agent de revêtement contient des composés de bas poids moléculaire, qui présentent en moyenne au moins une double liaison réactive et au moins un groupe à H actif.

7. Procédé selon la revendication 1 à 4, **caractérisé en ce qu'**une solution aqueuse, exempte d'initiateur, qui contient au moins un émulsifiant ainsi que 0,1 à 40% en poids de composés de bas poids moléculaire, qui peuvent être réticulés par polymérisation radicalaire et qui présentent au moins un groupe à H actif, est appliquée sur une couche de conversion.

8. Procédé selon la revendication 1 à 4, **caractérisé en ce qu'**une solution aqueuse, exempte d'initiateur, qui contient au moins un émulsifiant ainsi que 0,1 à 40% en poids de composés de bas poids moléculaire, qui peuvent être réticulés par polymérisation radicalaire et qui présentent au moins un groupe à H actif, est appliquée sur le substrat et un agent de revêtement pour la production de la couche de conversion est appliqué après séchage.

9. Procédé selon la revendication 1 à 8, **caractérisé en ce qu'**on choisit comme surface métallique un matériau à base de matériaux ferreux, d'acier et d'acier allié, d'aluminium, de magnésium, de zinc ou des alliages de ceux-ci ou des matériaux à surface revêtue de manière correspondante.

10. Procédé selon la revendication 9, **caractérisé en ce qu'**on revêt des substrats en forme de bande ou de plaque.

11. Agent de revêtement aqueux pour la production d'une couche de conversion sur des substrats métalliques, qui est exempt de chromate et qui contient 0,01 à 40% en poids, de préférence 0,1 à 25% en poids, d'au moins un composé de bas poids moléculaire présentant un poids moléculaire inférieur à 1000, qui présente au moins un groupe à H actif et au moins un groupe fonctionnel qui peut être réticulé par polymérisation radicalaire, celui-ci étant choisi parmi les esters ou les amides d'acides carboxyliques de bas poids moléculaire, les oligomères de polyester ou de polyéther avec des groupes (méth)acryle en position latérale ou terminale ou d'autres monomères qui contiennent des doubles liaisons activées.

12. Agent de revêtement aqueux selon la revendication 11, **caractérisé en ce que** le groupe fonctionnel réticulable par voie radicalaire est un groupe acide carboxylique ou carboxamide insaturé, en particulier un groupe acryle ou méthacryle.

13. Agent de revêtement aqueux selon la revendication 11 et 12, **caractérisé en ce que** le groupe à H actif est un groupe acide, en particulier un acide carboxylique, un acide sulfonique, ainsi qu'un acide phosphorique et phosphonique ou leurs dérivés.

14. Agent de revêtement aqueux selon la revendication 13, contenant comme composé de bas poids moléculaire 0,1 à 15% en poids de composés (méth)acrylate phosphoriques ou phosphoniques.

15. Agent de revêtement aqueux selon la revendication 11 à 14, **caractérisé en ce qu'**il ne contient pas d'initiateurs de polymérisation.

16. Utilisation d'un agent de revêtement selon la revendication 11 dans un procédé selon la revendication 1 à 4.

17. Laquage à deux couches qui peut être réticulé par rayonnement actinique, **caractérisé en ce qu'**une surface métallique est revêtue par une couche de conversion exempte de chromate, qui contient des composés de bas poids moléculaire présentant un poids moléculaire inférieur à 1000, qui présentent des doubles liaisons réticulables par polymérisation radicalaire et des groupes à H actif, et une deuxième couche dé recouvrement est appliquée, et les deux couches sont réticulées ensemble par polymérisation radicalaire, la couche de conversion exempte de chromate étant exempte d'initiateurs de polymérisation.

18. Laquage à deux couches selon la revendication 17, **caractérisé en ce que** la deuxième couche de recouvrement a été réalisée avec un agent de recouvrement en forme de poudre ou liquide.

19. Laquage à deux couches selon la revendication 18, **caractérisé en ce que** le substrat est ensuite façonné et d'autres couches de laque sont appliquées avant ou après le façonnage.
